Europäisches Patentamt

European Patent Office

Office européen des brevets

(19)

(11) Publication number: **0 145 874 B1**

# EUROPEAN PATENT SPECIFICATION

(12)

(45) Date of publication of patent specification: **11.09.91** (51) Int. Cl.5: **C05F 9/02**

(21) Application number: **84112100.7**

(22) Date of filing: **09.10.84**

The file contains technical information submitted after the application was filed and not included in this specification

(54) **Composting plant for refuse and sludge.**

(30) Priority: **18.10.83 IT 2334283**

(43) Date of publication of application:
**26.06.85 Bulletin 85/26**

(45) Publication of the grant of the patent:
**11.09.91 Bulletin 91/37**

(84) Designated Contracting States:
**AT BE CH DE FR GB LI LU NL SE**

(56) References cited:
**EP-A- 0 040 147**
**FR-A- 2 186 405**
**GB-A- 717 785**
**US-A- 1 832 179**
**US-A- 3 357 812**

(73) Proprietor: **SECIT S.p.A.**
**Viale Ortles, 52**
**I-20139 Milano(IT)**

(72) Inventor: **Zuliani, Alvaro, Dr.Ing.**
**Corso Lodi, 5**
**I-20100 Milano(IT)**

(74) Representative: **Di Iorio, Giuseppe, Dr.-Ing. et al**
**c/o NOVELTY SERVICE Galleria Buenos Aires, 15**
**I-20124 Milano(IT)**

## Description

The present invention concerns a process wherein solid refuse and sludge are treated in aerobic conditions inside a compost reactor. This is generally rectangular in shape and suitably positioned in relation to the ground. The treatment is effectued by means of periodic homogenization of the material by mixing screws. These are driven by suitable devices and can be moved and raised at least along an axis which is perpendicular to the reactor bottom plane. The invention also includes a system for sucking air from the material and means for the water cleaning of said system. It is known that one of the most efficient and economic methods for recycling natural resources consists of the aerobic decomposition of the organic substance by means of micro-organisms (natural composting).

This conversion usually takes place in plants where the solid refuses and/or sludge are introduced into composting reactors which consist of oblong parallelepiped tanks. In these the material is homogenized periodically and aerated constantly by appropriate systems.

Plants are already known where the material to be treated is introduced into the composting reactors by means of conveyor belts and expelled, at the end of the process; from an exit placed on the opposite side to the entrance.

The known plants, for example that described in the Italian patent No. 690596, include a compartment open at the top for containing the material which is treated by rotating mixers hanging from a trolley in the material itself. Said mixers are actioned by rotating motion only. They are generally parallel to each other and consist of a hollow shaft for feeding air to the bed of the material. Composting plants are also known like that described in the Italian patent No. 1013104.

In this the material to be reduced is moved by spiral-shaped mixers, pivoting on a horizontal axis placed above the bed.

These means can move forward in the material in the same direction as the material itself is moving. In the operational position, they are immersed in the bed at a variable angle of inclination backwards from their direction of movement. These mixers, when they come near the exit of the material from the reactor, i.e. having finished the forward movement, are folded back and brought back to the start of the reactor by shifting the trolley which holds them, to start a new mixing cycle.

Said spiral-shaped mixers are hollow to permit the passage of air to the bed of the material to be treated.

U.S. patent No. 3,357,812 discloses a composting reactor having a complex construction. A reactor is disclosed which has an adjustable leaning comprinsing a fals bottom formed from a heavy wire screen and a layer of sand. The leaning requires driving means and a plurality of mixers that rotate around axis perpendicular to the adjustable inclination of the reactor bottom.

The screws are always immersed into the material and further follow a Greek fret-shape run using a trolley which is mobile in two orthogonal directions and driven by two motors. Also, the blades of the stirrers are generally spiral. The patent also discloses introduction and extraction of air through the compost in order to reduce aerobic bacteria activity. Specifically, air is introduced and extracted through a metallic net and pipes located in the lower tank side wall.

Plants of this kind, even if efficient in many ways, are not free from disadvantages, a few of which will be mentioned as examples:

- the considerable space required by flat composting reactors to enable them to treat large quantities of material to be recycled;
- the limited number of collapsible screws which can move the material because of the minimum distance which must be kept between them and which is equal to their height;
- the opposing resistance of the material, lying flat in the reactor, to the flow towards the exit caused by the mixing screws. This resistance requires considerable power from the devices to drive the screws themselves and therefore greater energy consumption;
- the non-homogenous mixing of the material by the spiral screws because of the preferential furrows followed by them in the areas where the spirals themselves are inclined to reach the working position from the rest position;
- the formation, on the bottom of the composting reactor and particularly near the material input side, of heaps of heavy material (stones, iron, bottles) which have not been treated evenly. These accumulations (also due to the backward leaning position of the mixing screws) are not even within the screws reach, when said screws, at the end of their travel lift backwards returning in their initial working position;
- the complexity of machinery for pumping air into the hollow screws or, in the case of air being blown in from the bottom, the tubes for this being blocked by deposited compost;
- the need for very solid and bulky structures to support the weight of the mixing screws, the trolleys which transport them, the devices which move them and of the air input pumps. These are machines whose weight burdens elevated planes or runways which have to be expressly built (walls, columns, reactor walls);

- the unpleasant smells around the composting reactor, also caused by the hot air being blown in. This, passing through the material, gets hot and damp. This aeration does not involve all the surrounding material in the biological process. This is because of the air rising immediately to the open side of the reactor, along preferential paths. These disadvantages increase in the case of closed reactors or ones with overlying covering structures, resulting in the need for complex ventilation of the premises;

- the difficulty in cleaning and rendering hygienic the bottom of the reactor because of frequent obstructions in the tubes for washing. These can be easily blocked by the heavy materials which are deposited on the bottom of the composting bed;

- the impossibility of proceeding efficiently with the refuse treatment, should either the air pumping or the mixing system break down, due to the interdependence of the two systems.

The primary purpose of the present invention is to provide a process which is free from the above disadvantages and which gives a more efficient, more economic and "universal" treatment of compost.

Another purpose of this invention is to use a plant which is structurally simple, robust, and gives a high yield at a relatively low cost.

These and other aims are achieved by making use of the plant according to the present invention, which comprises an oblong rectangular-shaped reactor for containing a bed of material, provided with an entrance and an exit for loading and unloading the material itself, mixers means in the form of revolving screws, means for driving said screws, means for making air circulate in the material, as also means for washing said air-carrying means; and that is here characterized by the fact that the mixing screws, when working, rotate on an axis which is at right angles to the at least slightly inclined plane of the reactor bottom, and that, at the return stage, the mixing screws make a traverse movement along said axis; and that the air suction channels cut into the inclined bottom of the reactor are covered by protective means against said compost deposits and which also allow the treatment air to pass. This is now sucked from the bottom (and no longer conveyed by means of channels cut into the mixing screws).

The present plant enables the material to be treated better by the mixing screws because they rotate around and move along an axis which is perpendicular to the inclined plane of the reactor, causing in this way the reascend of the material treated so that, as a result, its processing is more homogenous.

The descent of the screws from above, instead of the conventional rotating folding, allows to prevent the accumulation of unworked heaps of compost and means that the size of the screws can be made tougher as they no longer have the devices needed to fold them back. This means that the configuration of the mobile screw support bridge can be improved and simplified. The lateral stanchions of the bridge are equipped with rolling elements in direct contact with the ground, at the lower end.

In a preferred realization, the composting reactor according to the discovery, is generally inclined to the ground plane at a variable angle between 4° and 15°, so as to give the material a greater speed of movement than that of a reactor placed perfectly level (in this case, the movement of the material towards the reactor exit is due exclusively to the progress induced by the movement of the screws. This means that it can be too slow and involve longer processing time than really necessary). It also gives a greater volumetric capacity of the reactor itself for equal plane bulk than a perfectly level reactor.

According to a further aspect of the discovery, it is possible to achieve considerable improvement in the biological conversion process, thanks to the particular compost aeration system, no longer done by means of hollow screws.

Now, in fact, the air suction systems from the bottom of the reactor are preferably in the form of channels cut in the bottom of the reactor. These avoid the formation of dust and damp in the area surroundind the material itself and do not pose the problems connected with making the mobile air transport elements (hollow mixing screws) of known plant; in fact these screws can easily become blocked because of the accumulation of material in the reactor.

According to the present discovery, the plant has advantageous means for covering the above-cited channels. These are mostly in the form of tiles so as to create ample channeling with suction fissures in such a position as to reduce considerably the danger of blockage by inert material.

The discovery gives further advantages due to the fact that a washing system of said channels is provided. These are arranged preferably parallel to the direction of movement of the material inside the reactor. Said washing system provides for the introduction of a fluid, preferably water, into the air suction channels, and for a second channel perpendicular to the air suction channels where the washing water collects.

This collection channel is inclined and has a collection well at its lower end where the dirty water is sucked from by means of a pump. It must also be remembered that another advantage of the present invention consists in having separated the material mixing and homogenization system from the functioning of the air suction system. In this way the whole plant can go on working at a 50% operative capacity, should one of the two systems break down. The air suction which takes place in the plant, according to the present discovery, through the channels cut into the bottom of the composting reactor and the homogenization effected by the screws perpendicular to the generally inclined plane of the reactor itself, provide a reduction in the volume and a rapid decomposition of the material to be treated in the oblong composting reactor. This is done at the optimum temperature for the elimination of pathogenic bacteria of approx. 70° C.

The different aspects and advantages of the plant used according to the discovery will appear more clearly from the description of preferred realization form, which is not limitative and is shown in the attached drawings where:

- fig. 1 is a schematic view of the composting plant according to the present invention, partially sectioned with a plane which takes in the rotation axes of all screws;
- fig 2 represents an enlarged detail of the bottom of the reactor shown in fig. 1;
- fig. 3 represents a sectioned view of fig. 2 along an axis perpendicular to the inclined bottom of the reactor itself.

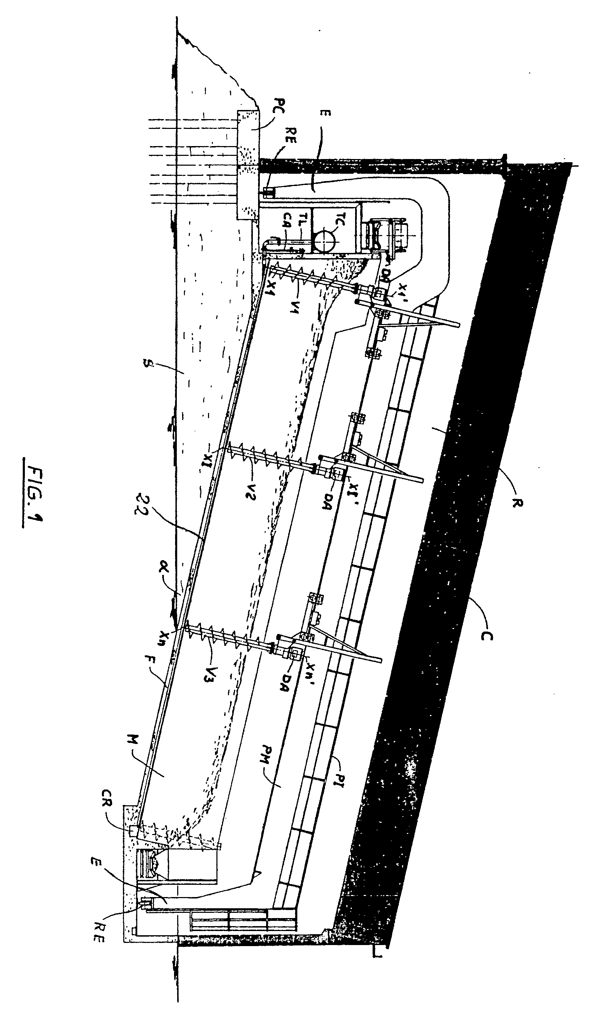

In figure 1 the composting reactor group is indicated by 5, which, substancially, includes: at the bottom, an inclined base F on the ground S and the material to be treated M which now flows more easily in the direction of movement because of said inclination. At the top C is a covering and, going from top to bottom, there is a runway PI on a mobile bridge PM which carries the mixing screws $V_1$, $V_2$, $V_n$ which, according to a considerable aspect of the invention:

   a)  are arranged along axes $X_1$-$X_1$'; $X_i$-$X_i$'; $X_n$-$X_n$' which are at right angles to the bottom F of the reactor R;
   b)  the screws $V_1$, $V_n$ not only rotate on these axes during the working stage but, during the return stage, they also move upwards along them;
   c)  the screws in question no longer have internal channels for introducing air into the composting mass.

The bridge PM too is preferably parallel to the bottom F: this facilitates the orthogonality of the screws $V_1$-$V_n$ in relation to the plane of F. An advantage of the plant according to the invention is now seen in the fact that the screws are made without tilting mechanism and internal cavities; in this way, they have a much simpler structure which is stronger and ensures much easier maintenance and therefore longer duration.

As stated earlier, since the air is no longer conveyed to the composting material by cavities in the screws $V_1$-$V_n$, it is now conveniently sucked from the bottom.

Again in fig. 1 TC indicates the piping of the air collector and CA the piping for the introduction of the washing water of the channels situated under the bottom of the composting reactor. TL indicates the air suction channel and PC a central bed, preferably in reinforced concrete to support the mobile bridge PM where the screws run. CR indicates the channel for collecting the washing waters of the air suction channels placed in the bottom of the reactor. DA indicates the mixing screws movement means. α indicates the angle of inclination of the composting silo of the ground plane. Its optimum values which were indicated previously, endow the material for treatment with a speed of movement which, in relation to the type of material itself, is ideal for the latter's length of stay inside the reactor.

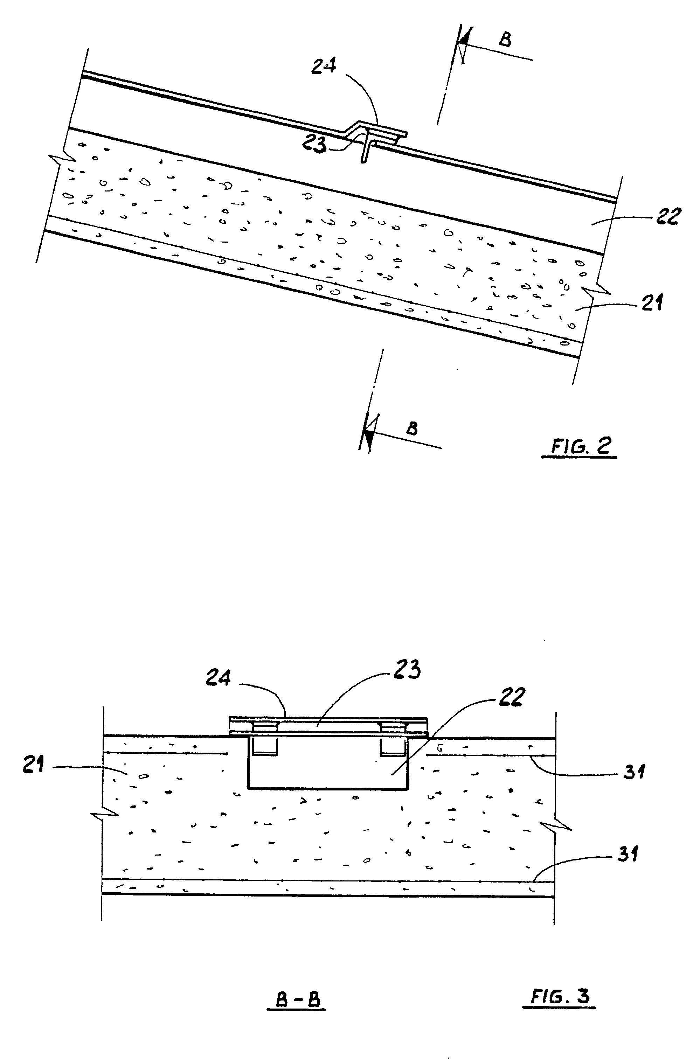

Figure 2 illustrates the characteristic of the discovery which consists in the fact that in the foundation 21 underlying the bottom F of the composting reactor R, the cavity of the air suction channel 23 is cut into the suction channel 22. It is protected by a tile-shaped covering 24 which prevents infiltration of compost deposits inside the same. This is one of its advantages.

Figure 3 represents a schematic view of the bottom of the composting reactor according to a section B-B of the drawing in figure 2. Here, 21, 22, 23 and 24 have the same meanings as in figure 2, while 31 represents the electrically welded grid of the concrete casting.

As described earlier, the channels for sucking air 22 are washed periodically by the input of a liquid, preferably water, into them. This is done by means of a pump situated outside the composting reactor. The dirty water from washing flows into an inclined collection channel which conveys it to a containing well placed outside the reactor.

The dirty water is finally discharged from this containing well by means of another pump.

## Claims

1.  A process for the treatment of refuse and biological sludge material in a composting plant, comprising a composting reactor (R) which includes:
    - an oblong rectangular-shaped tank for containing a bed of material (M) to be treated on an inclined bottom (F) and provided with an entrance and an exit for loading and unloading the material;

- mixing screws (VI,V2,V3) that rotate around their axes (X1-X1',Xi-Xi',Xn-Xn') perpendicular to said inclined bottom during the mixing and homogenizing or working phase of the material;
- means IDA) for moving said mixing screws in said tank, and
- means for making air circulate in the material, characterized in that,at the end of each working phase, at the return stage said screws (V1,V2,V3,) are lifted along said axes (X1-X1',Xi-Xi',Xn-Xn') while being kept under rotation so as to achieve a reascent of material, and lowered along said axes before starting a new working cycle by a longitudinal linear movement along said oblong reactor (R) in the direction of the material progress.

2. Composting process according to claim 1 characterized in that use is made of mixing-screws supported by a mobile bridge-crane (PM) having lateral stanchions (E) provided at their lower end with rolling elements (RE) that are in direct contact with the ground (S).

3. Composting process according to preceding claims, wherein use is made of a composting reactor having a bottom which is inclined at an angle between 4° aid 15° to the horizontal plane, so as to give the material a suitable movement speed for obtaining an optimum stay time of the material to be treated in the reactor.

4. Composting process according to preceding claims, characterized in that the air necessary for the material treatment is sucked from the reactor bottom (F) by inclined longitudinal channels (22) cut in the body of the reactor bottom, said channels being provided with covering and air passages means avoiding clogging caused by deposits of composting material when air is sucked through the composting material .

5. Composting process according to claims 4, characterized in that said covering and air passages means include tile-shaped elements (24) partially overlapped so as to create channeling with suction fissures in order to reduce the danger of blockage by inert material.

6. Composting process according to preceding claims, characterized in that the air suction into the channels is achieved through an air piping (TC) connected to a suction pump.

7. Composting process according to preceding claims, characterized in that said air suction channels (22) are periodically cleaned by a washing with liquid pumped into the channels through a piping (CA) connected to a liquid whashing system.

8. Composting process according to claim 7, characterized in that the dirty whashing waters from the inclined channels (22) are collected in a further inclined channels (CR) joined at lower end of said channels (22); said further channel being connected at its lower end with a collecting well from which spent whashing liquid is sucked by a pump.

9. Composting process according to preceding claims,characterized in that the operation of the mixing and homogenizing system of the material by said mixing screws is indipendent from the air suction system such that in the case of failure of one of the two systems to operate the stoppage of the whole plant is prevented by operating the remaining operable system at reduced volume capacity of compost material.

**Revendications**

1. Procédé de traitement d'ordures et de boues biologiques dans une installation de compostage comprenant un réacteur de compostage (R) qui comprend:
   - une cuve rectangulaire oblongue destinée à contenir un lit de matières à traiter (M) placé sur un fond incliné (F) et pourvue d'une entrée et d'une sortie pour le chargement et le déchargement des matières;
   - des vis de malaxage (V1,V2,V3) montées en rotation autour de leurs axes (X1-X1', Xi-Xi', Xn-Xn') perpendiculaires audit fond incliné au cours de la phase du malaxage et de la homogénéisation ou du travail des matières;
   - des moyens (DA) pour l'entrainement desdites vis de malaxage dans ladite cuve, et
   - des moyens pour faire circuler l'air à l'intérieur desdites matières, caractérisé en ce qu'à la fin de chaque phase de travail, lors de l'étape de retour, lesdites vis (V1,V2,V3) sont relevées selon leurs axes (X1-X1', Xi-Xi', Xn-Xn'), tout en restant maintenues en rotation, pour faire remonter les matières, et puis sont descendues selon les mêmes axes avant le début d'une nouvelle phase de travail, en effectuant un mouvement linéaire longitudinal le long dudit réacteur oblong (R) en direction d'avancement des matières.

2. Procédé de compostage selon la revendication 1, caractérisé en ce qu'on utilise des vis de malaxage supportées par un pont roulant (PM) ayant des étançons latéraux (E) munis à leurs extrémités inférieures d'éléments roulants (RE) reposant directement sur le sol (S).

3. Procédé de compostage selon les revendications précédentes, utilisant un réacteur de compostage ayant un fond incliné faisant un angle pouvant varier de 4° à 15° avec l'horizontale, de façon à imprimer aux matières traitées un glissement à une vitesse assurant une durée de séjour optimale de matières dans le réacteur.

4. Procédé de compostage selon les revendications précédentes, caractérisé en ce que l'air néccéssaire au traitement de matières est aspiré par le fond (F) du réacteur par des canaux longitudinaux inclinés (22) ménagés dans le corps du fond de réacteur, lesdits canaux étant munis des éléments de recouvrement et de passages d'air pour éviter un bouchage causé par des dépôts de matières de compostage, lorsque l'air est aspiré à travers lesdites matières de compostage.

5. Procédé de compostage selon la revendication 4, caractérisé en ce que lesdits moyens de recouvrement et de passages d'air comprennent des éléments en forme de tuiles (24) se recouvrant partiellement, de façon à créer des filets d'aspiration à travers les fentes et à réduire ainsi le risque de blocage par la matière inerte.

6. Procédé de compostage selon les revendications précédentes, caractérisé en ce que l'aspiration d'air est réalisé au moyen de tuyauteries d'air (TC) connectées à une pompe aspirante.

7. Procédé de compostage selon les revendications précédentes, caractérisé en ce que lesdits canaux d'aspiration d'air (22) sont nettoyés périodiquement par lavage au moyen d'un liquide pompé à travers les canaux par des tubes (CA) connectés à un système de lavage liquide.

8. Procédé de compostage selon la revendication 7, caractérisé en ce que les eaux de lavage usées en provenance des canaux (22) sont collectés par d'autres canaux inclinés (CR) connectés à l'extrémité inférieure desdits canaux (22), ces autres canaux débouchant à leurs extrémités inférieures dans un puits collecteur, à partir duquel le liquide de lavage usé est évacué au moyen d'une pompe.

9. Procédé de compostage selon les revendications précédentes, caractérisé en ce que l'opération du système de malaxage et de homogénéisation des matières' au moyen de vis de malaxages est indépendante du système d'aspiration d'air, de façon à ce qu'en cas de panne de l'un des deux systèmes, on évite l'arrêt de l'installation entière en poursuivant le fonctionnement de l'autre système opérationnel avec une capacité de volume réduit de matières de compostage.

**Patentansprüche**

1. Verfahren zum Behandeln von Abfall- und biologischem Schlamm-Material in einer Kompostieranlage, die einen Kompostierreaktor (R) mit

einem länglichen, rechteckförmigen Tank zur Aufnahme eines Bettes des zu behandelnden Materials (M) auf einem geneigten Boden (F) mit einem Einlaß und einem Auslaß zur Beschickung und Entnahme des Materials,

Mischerschnecken (V1, V2, V3), die während der Materialmisch- und Homogenisier- oder Arbeits-Phase um ihre zu dem geneigten Boden senkrechte Achsen (X1-X1', Xi-Xi', Xn-Xn') rotieren,

einer Einrichtung (DA) zum Bewegen der Mischerschnecken in dem Tank, und

einer Einrichtung zum Zirkulieren des Materials in dem Tank enthält,

dadurch gekennzeichnet, daß in der Rückkehrstufe am Ende jeder Arbeitsphase die Schnecken (V1, V2, V3) längs ihren Achsen (X1-X1', Xi-Xi', Xn-Xn') angehoben und dabei in Drehung gehalten werden, um ein Wideransteigen von Material zu erreichen, und daß sie vor dem Beginn eines neuen Arbeitszyklus durch eine Linearbewegung längs dem länglichen Reaktor (R) in Richtung der Materialbewegung längs ihren Achsen abgesenkt werden.

2. Kompostierverfahren nach Anspruch 1, dadurch gekennzeichnet, daß Mischerschnecken verwendet werden, die von einem bewegbaren Brückenkran (PM) mit seitlichen Säulen (E) gehalten sind, die an ihren unteren Enden in direkter Berührung mit dem Boden (S) befindliche Rollkörper (RE) aufweisen.

3. Kompostierverfahren nach Anspruch 1 oder 2, wobei ein Kompostierreaktor verwendet wird, der einen unter einem Winkel zwischen 4° und 15° gegenüber der Horizontalen geneigten Boden auweist, um dem Material eine geeignete Bewegungsgeschwindigkeit zu erteilen und eine optimale Verweilzeit des zu behandelnden Material in dem Reaktor zu erzielen.

4. Kompostierverfahren nach einem der vorhergehenden Ansprüche, dadurch gekennzeichnet, daß für die Materialbehandlung notwendige Luft vom Reaktorboden (F) durch geneigte Längskanäle (22) angesaugt wird, die in die Masse des Reaktorbodens eingeschnitten sind und mit Abdeck- und Luftkanaleinrichtungen versehen sind, die ein Verstopfen durch Ablagerungen von kompostierendem Material verhindern, wenn Luft durch dieses hindurchgesaugt wird.

5. Kompostierverfahren nach Anspruch 4, dadurch gekennzeichnet, daß die Abdeck- und Luftkanaleinrichtungen dachplattenartige Bauelemente (24) aufweisen, die teilweise überlappend derart angeordnet sind, daß eine Kanalwirkung mit Saugspalten erreicht wird, um die Gefahr eines Verstopfens durch träges Material zu verringern.

6. Kompostierverfahren nach einem der vorhergehenen Ansprüche, dadurch gekennzeichnet, daß die Luftansaugung in die Kanäle durch eine mit einer Saugpumpe verbundene Luftleitung (TC) erreicht wird.

7. Kompostierverfahren nach einem der vorhergehenen Ansprüche, dadurch gekennzeichnet, daß die Luftansaugkanäle (22) periodisch gereinigt werden, indem sie mit einer Flüssigkeit gewaschen werden, die durch eine mit einem Waschflüssigkeitsystem verbundene Leitung (CA) in die Kanäle gepumpt wird.

8. Kompostierverfahren nach Anspruch 7, dadurch gekennzeichnet, daß das schmutzige Waschwasser aus den geneigten Kanälen (22) in einem an deren unteren Enden angeschlossenen weiteren geneigten Kanal (CR) gesammelt wird, der an seinem unteren Ende mit einer Sammelwanne verbunden ist, aus der verbrauchte Waschflüssigkeit durch eine Pumpe abgesaugt wird.

9. Kompostierverfahren nach einem der vorhergehenen Ansprüche, dadurch gekennzeichnet, daß der Betrieb des Material-Misch- und Homogenisier-Systems mittels der Mischerschnecken von dem Luft-Ansaugsystem unabhängig ist, so daß bei Versagen eines der beiden Systeme eine Unterbrechung der gesamten Anlage verhindert wird, indem das noch funktionsfähige System mit verminderter Volumenkapazität an Kompostmaterial betrieben wird.

FIG. 1

FIG. 2

B - B

FIG. 3